# EUROPEAN PATENT APPLICATION

(11) **EP 4 756 268 A1**
(43) Date of publication of application: **10.06.2026**
(21) Application number: 24848711.8
(22) Date of filing: 18.06.2024
(51) Int. Cl.: F16K 11/087, F16K 5/04, F16K 11/085

(54) **MOTOR-OPERATED VALVE**

(30) Priority: 02.08.2023 JP 2023126619
(71) Applicant: Nippon Thermostat Co., Ltd., Kiyose-shi Tokyo 204-0003 (JP)
(72) Inventor: KUMASHIRO Tsuyoshi, Kiyose-shi, Tokyo 204-0003 (JP)
(74) Representative: Hoffmann Eitle
(86) International application number: PCT/JP2024/021997
(87) International publication number: WO 2025/028050

(57) **Abstract**

The present invention pertains to a motor-operated valve having a rotary valve body, and reduces pressure loss when a cooling liquid passes through the valve body. A valve body 12 includes: a hollow valve part 12b; a rotary shaft holding part 12c which is positioned at the center of the valve part and through which a rotary shaft is inserted; and a film part 30 positioned inside the valve part. The valve part is disposed with one end facing an opening 11a, has an outer wall capable of closing a communication port 11b, a valve hole capable of communicating with the communication port, and a valve opening formed at the one end of the valve part and communicating with the opening. When the opening side of the valve hole is the lower side and the opposite side is the upper side, the film part is formed in a fan shape in a plan view, an upper end is connected to an inner wall of the valve part so as to be along an upper edge of the valve hole, and a lower end is connected to a part which is an outer periphery of the rotary shaft holding part and faces the valve hole. (WIPO)

## Description

### Technical Field

The present invention relates to an electric valve.

### Background Art

For example, in a rotary flow rate control valve used for a cooling device for an automobile, there is a case where a valve having an outer wall in a spherical shape or a cylindrical shape formed of a straight barrel is housed and disposed in a valve housing to be rotatably operated from outside. The rotary flow rate control valve uses a spherical or cylindrical valve and is configured so that a desired motion can be obtained with respect to a passage provided to be connected to the valve chamber within the valve housing by appropriately opening and closing the passage by the rotational motion of the valve. In other words, a valve hole (an opening) is formed on the side surface of the valve, and the valve hole overlaps with the position of the outflow port, which is formed on the inner surface of the valve housing, by the rotational motion of the valve, thereby causing the coolant to flow to the outflow port.

The coolant from the engine (cylinder head) side flows into the valve from the axial direction of the valve, passes through the valve hole on the valve side surface, and flows to the outflow port. That is, in the structure within the valve, the flow passage of the coolant is substantially at a right angle.

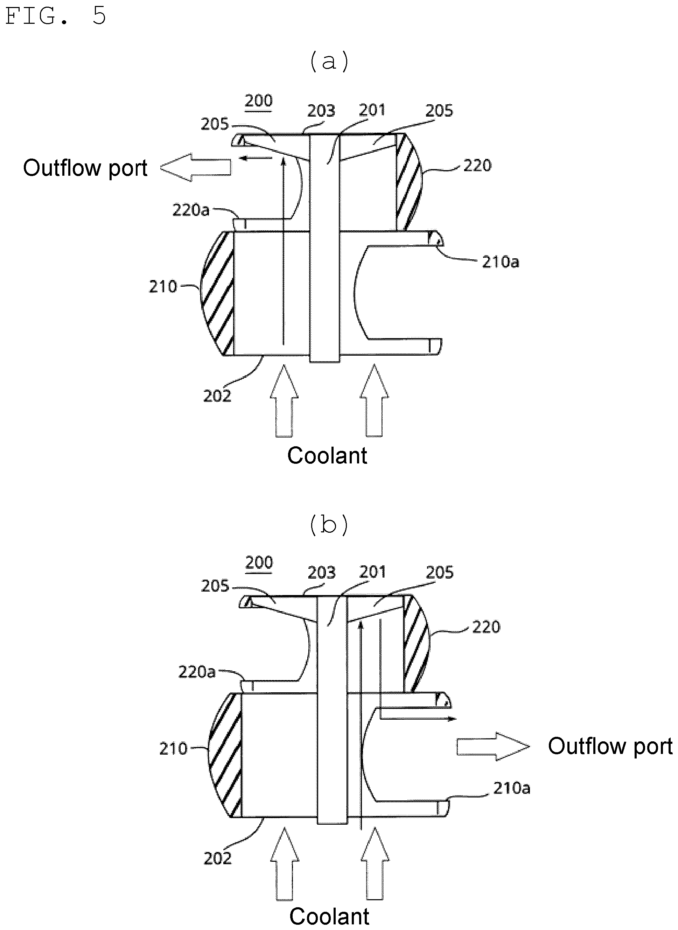

As schematically shown in FIG. 5(a), PTL 1 discloses a configuration in which a plurality of plate-like ribs 205 radially extending in the radial outward direction as seen from a rotation shaft 201 are provided in a valve member bottom portion 203 provided at a position opposite to an inflow port 202 of a coolant in the rotation shaft 201 direction of a valve 200. The ribs 205 are configured to guide the coolant flowing within the valve 200 from the center at which the rotation shaft 201 of the valve member bottom portion 203 is located in the radial outward direction.

### Citation List

### Patent Literature

[PTL 1] Japanese Patent No. 6773247

### Summary of Invention

### Technical Problem

However, since the ribs 205 are plate-shaped and there are gaps between the adjacent ribs 205 and the coolant flows into the gaps, it is difficult to guide the coolant flowing within the valve 200 smoothly in a radial outward direction. Consequently, the pressure loss when the coolant passes through the valve cannot be sufficiently reduced. Such a problem may also occur when the coolant flows in the opposite direction.

The invention was achieved in view of the above-described problem and aims to provide an electric valve with a rotary valve that can reduce the pressure loss when a coolant passes through it.

### Solution to Problem

In order to solve the above-described problem, an electric valve according to the invention includes a housing with an opening at one end and a communication port in an outer circumference thereof, a valve that is inserted into the housing, rotates about a rotation shaft, and opens and closes the communication port, and a driver for driving the valve to rotate,
wherein
the valve has a hollow valve portion, a rotation shaft holder located at the center of the valve portion through which the rotation shaft is inserted, and
a film portion located inside the valve portion,
the valve portion is disposed with one end facing the opening, and provided with an outer wall capable of blocking the communication port, a valve hole capable of communicating with the communication port, and a valve opening formed at the one end of the valve portion and communicating with the opening, and, wherein, denoting that in the valve hole, the opening side is a lower side and the opposite side is an upper side, the film portion is formed in a fan shape in a plan view, and the upper end thereof is connected to the inner wall of the valve portion along the upper edge of the valve hole, and the lower end thereof is connected to the portion facing the valve hole on the outer circumference of the rotation shaft holder.

According to the above configuration, the coolant flowing from the opening into the valve can be smoothly guided to the valve hole. As a result, the pressure loss of the coolant flowing through the valve can be reduced, and the power consumption can be reduced.

Furthermore, since the pressure loss of the coolant within the valve can be reduced, the diameter of the valve hole can be designed to be smaller, and the layout property can be improved. Moreover, the weight of the valve can be reduced, and the durability thereof can be improved.

It is desirable that the length in the circumferential direction of one side of the film portion, which is connected along the upper edge of the valve hole to the inner wall of the valve portion, is formed to be equal to or longer than the length in the circumferential direction of the upper edge of the valve hole.

According to the above configuration, the coolant flowing in from the opening can be efficiently caused to flow to the valve hole

It is desirable that, in a longitudinal cross-section of the valve, the center part of the film portion is curved or inclined in a direction away from the valve hole.

According to the above configuration, the pressure loss of the coolant flowing to the valve hole can be reduced as much as possible.

### Advantageous Effects of Invention

According to the electric valve of the invention, in an electric valve including a rotary valve, the pressure loss when a coolant passes through the valve can be reduced.

### Brief Description of Drawings

[FIG. 1]

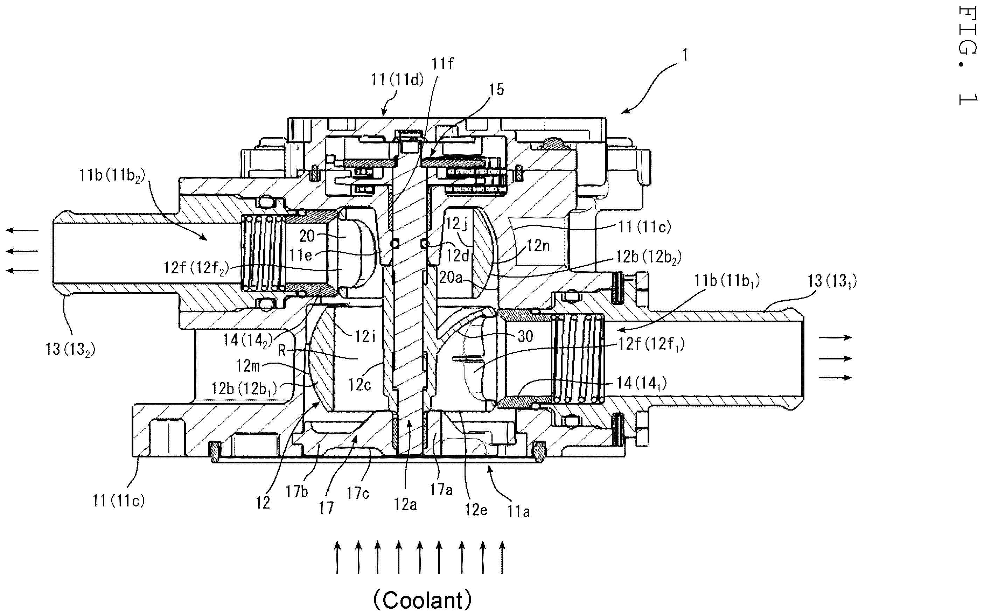

   FIG. 1 is a cross-sectional view showing a configuration example of an electric valve of an embodiment.
[FIG. 2]

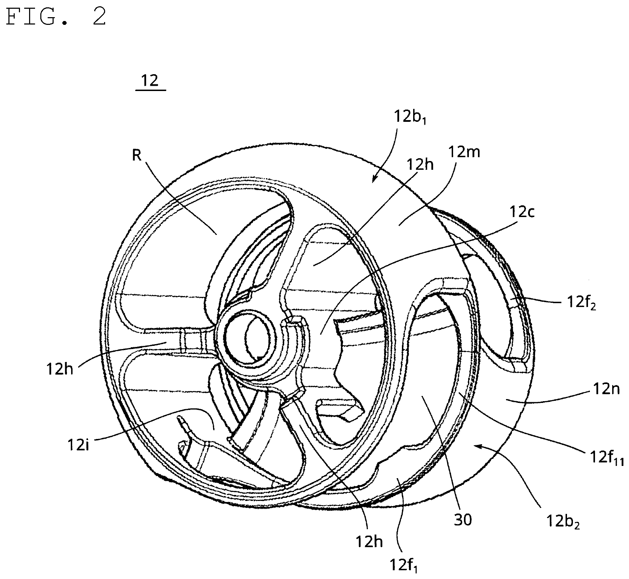

   FIG. 2 is a perspective view of a valve body of a valve provided in the electric valve in FIG. 1.
[FIG. 3]

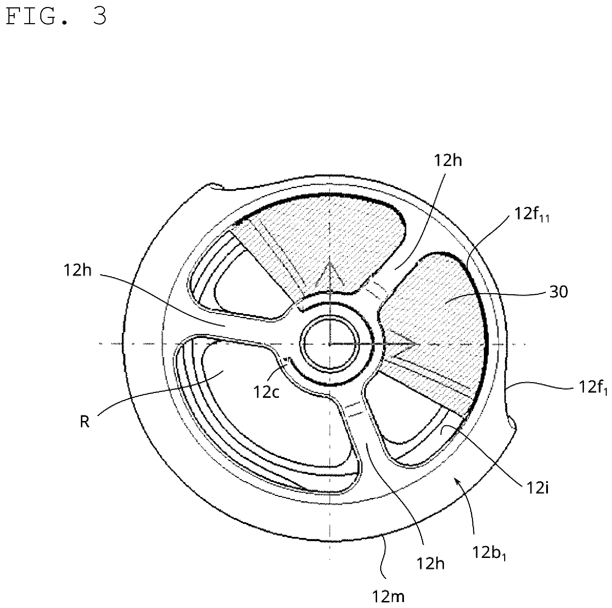

   FIG. 3 is a bottom view of the valve body in FIG. 2.
[FIG. 4]

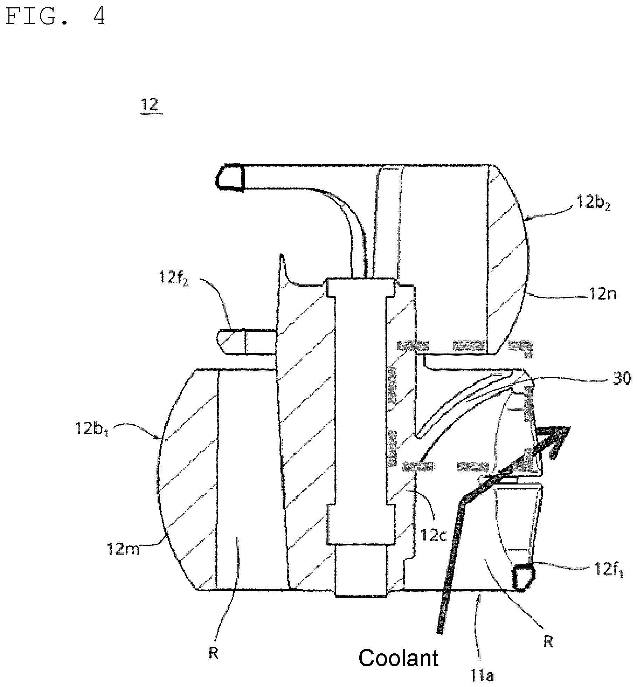

   FIG. 4 is a cross-sectional view of the valve body in FIG. 2 in an axial direction.
[FIG. 5]
   FIG. 5 is a cross-sectional view showing a part of a valve in the related art.

### [Description of Embodiments]

Hereinafter, embodiments of an electric valve according to the invention will be described in detail with reference to the drawings. Note that the invention is not limited to these embodiments. Furthermore, in the specification and the drawings of the application, the elements that can be described in the same manner may have the same signs, and the overlapping description thereof may be omitted.

FIG. 1 is a sectional view showing a configuration example of an electric valve of one embodiment. In the present embodiment, for convenience of description, upward and downward directions in FIG. 1 are simply referred to as "upper" and "lower".

An electric valve 1 of the present embodiment is used, for example, in a cooling circuit (a circulation system of a coolant) of an automobile including a cooling passage in which a coolant flowing out from an engine (cylinder head side) returns to the engine (cylinder block side) via a radiator, and a bypass passage in which the coolant flowing out from the engine returns to the engine not via (around) the radiator. In the electric valve 1, valve holes formed in the valve are controlled to open and close, thereby respectively distributing the coolant flowing in through the engine toward the cooling passage and the bypass passage and controlling the flow rates thereof.

### Basic Structure of Electric Valve

The electric valve 1 of the present embodiment includes
a housing 11 in which an inflow port 11a and a plurality of outflow ports 11b (11b₁, 11b₂) for the coolant are formed,
a valve 12 which is housed in the internal space of the housing 11 and rotatable about an axis (a rotation shaft) in the internal space, adaptors 13 (13₁, 13₂) which are connected to the outflow ports 11b, and seal members 14 (14₁, 14₂) for blocking the leakage of the coolant that passes through valve holes 12f (12f₁, 12f₂) formed in the valve 12 and is distributed toward the adaptors 13. In the electric valve 1, the rotation of the valve 12 is controlled according to an instruction from a controller (not shown) provided in a vehicle, which distributes the coolant appropriately toward the cooling passage and the bypass passage.

Hereinafter, the structure of the electric valve 1 of the present embodiment will be described more specifically. In the present embodiment, the direction along the axial line as the rotation center of the valve 12 is referred to as the "axial direction", the direction orthogonal to the axial line is referred to as the "radial direction", and the direction around the axial line is referred to as the "circumferential direction".

The housing 11 includes a body 11c having an internal space (a valve housing portion 20) for housing the valve 12, and a lid 11d having a bottomed shape forming a housing space for housing a reduction gear 15 between an upper surface of the body 11c and itself. The opening end portion (peripheral edge) of the lid 11d is attached to the outer circumferential portion of the upper surface of the body 11c to close the housing space. Furthermore, the reduction gear 15 housed in the housing space includes a plurality of gears and has a function of reducing and transmitting the rotation of a motor (driver: not shown) that operates in response to a command from the controller to the valve 12.

In the housing 11, an insertion cylinder with a cylindrical shape 11e rotatably supporting a shaft 12a that functions as the rotation shaft of the valve 12 in an inserted state is provided in an upper part of the body 11c. A journal 11f rotatably supporting the upper portion of the shaft 12a is provided on the inner circumference of the insertion cylinder 11e.

In the housing 11, the outflow ports 11b (11b₁, 11b₂) as communication ports having substantially cylindrical shapes are projected radially outward in the outer circumference of the body 11c (an inner wall 20a of the valve housing portion 20). The outflow ports 11b₁, 11b₂ shown in FIG. 1 are respectively provided at different positions in the axial direction and the circumferential direction. Furthermore, the adaptors 13 (13₁, 13₂), having cylindrical shapes communicating with the above-described cooling passage and bypass passage, are respectively inserted into and fixed in the outflow ports 11b.

In FIG. 1 (cross-sectional view), the outflow ports 11b are provided in two parts of the body 11c; however, not limited to these positions. The outflow ports 11b may be further formed at other positions than those in FIG. 1 according to the number and directions of the flow passages for distributing the coolant.

Furthermore, the inflow port 11a, as an opening communicating with the cylinder head side for taking the coolant into the valve 12 side, is formed on the lower end (one side in the axial direction) of the housing 11. Furthermore, a frame 17, supporting the lower end of the shaft 12a by a cylindrical portion 17a formed in the center part, is attached to the inflow port 11a. Specifically, the frame 17 has a framework portion with an annular shape 17b attached to the housing 11 along the peripheral edge of the inflow port 11a, the cylindrical portion 17a formed in the center part of the framework portion 17b, and three bridges 17c for frame reinforcement, which respectively connect a plurality of parts (at equal intervals) of the framework portion 17b and the cylindrical portion 17a. The coolant can pass through the frame 17 and flow into the housing 11.

### Valve

The valve 12 has a shaft 12a that functions as the rotation shaft and a valve body 12b having an outer wall capable of changing the communication state with the outside and being integrally rotatably connected to the shaft 12a. The gears as component members of the reduction gear 15 are integrally attached to the shaft 12a. Thus, when the gears rotate due to the driving of the motor, the valve 12 (the shaft 12a, the valve body 12b) integrally axially rotates with the rotation.

Furthermore, in the valve 12, the valve body 12b is provided with a connecting part 12c (rotation shaft holder) that connects to the outer circumferential portion of the shaft 12a while the shaft 12a while the shaft is penetrating through at the center part. The valve body 12b has two tubular valve portions vertically connected, and each valve portion has upper and lower valve openings and a spherical outer wall. The valve openings communicate with the inflow port 11a (opening) of the housing 11. In the present embodiment, one valve portion formed in the lower part is a first valve portion 12b₁, and the other valve portion formed thereon is a second valve portion 12b₂.

More specifically, the valve body 12b is made of a resin, has a hollow portion, and is formed substantially in a tubular shape and housed in the valve housing portion 20. The shaft 12a is located on the center axis of the valve 12. FIG. 2 is a perspective view of the valve body 12b as seen from the downside (from the side of the inflow port of the coolant). As shown in FIG. 2, the valve body 12b of the valve 12 has the first valve portion 12b₁ that opens at upper and lower ends and the second valve portion 12b₂ that similarly opens at upper and lower ends and is formed to communicate in the axial direction from one end (the upper end in FIG. 1) of the first valve portion 12b₁. The inside of the first valve portion 12b₁ and the inside of the second valve portion 12b₂ communicate with each other. As shown in FIG. 1, inside the valve 12, a communication path R for the coolant is formed, being formed by the first valve portion 12b₁ and the second valve portion 12b₂, and communicates with the inflow port 11a (opening).

Outer walls 12m, 12n (valve outer walls) of the first valve portion 12b₁ and the second valve portion 12b₂ are formed in spherical shapes having the largest diameters at the centers in the axial direction (so-called a ball valve) as shown in the drawing, and valve portion inner walls 12i, 12j forming the communication path R through which the coolant passes are formed in parallel to the axial direction.

Furthermore, the inner wall 20a of the valve housing portion 20 is formed along the shapes of the outer walls 12m, 12n of the first valve portion 12b₁ and the second valve portion 12b₂, and the gap distances between the inner wall 20a and the outer walls 12m, 12n are formed substantially the same in the circumferential direction.

As shown in FIG. 2, within the first valve portion 12b₁, for example, three reinforcing members 12h are evenly disposed in the circumferential direction and reinforce the valve 12. These reinforcing members 12h are configured not to interfere with the insertion cylinder 11e. The shaft 12a is guided by the insertion cylinder 11e and rotates integrally with the valve body 12b. Note that the communication path R serves as a flow passage of the coolant passing between the plurality of reinforcing members 12h in the first valve portion 12b₁.

The part between the shaft 12a and the insertion cylinder 11e of the housing 11 is closed by a seal ring 12d. Accordingly, the coolant within the body 11c does not flow from the insertion cylinder 11e into the lid 11d. Furthermore, the lower end opening of the first valve portion 12b₁ functions as an introduction port 12e that takes the coolant flowing in from the cylinder head side via the frame 17 (inflow port 11a) into the internal space of the valve 12.

In the first valve portion 12b₁ and the second valve portion 12b₂, a valve hole 12f₁ and a valve hole 12f₂ are provided, respectively. The valve hole 12f₁ and the valve hole 12f₂ are collectively referred to as valve holes 12f. The valve holes 12f penetrate the thickness of the first valve portion 12b₁ and the second valve portion 12b₂ in the radial direction. When the valve 12 rotates and the valve hole 12f overlaps with the opening of the seal member 14, the coolant flows out from the overlapping portion. In this manner, when the valve body 12b rotates with the rotation of the shaft 12a, the respective valve holes 12f open and close and change the communication states between the inflow port 11a and the outflow ports 11b (11b₁, 11b₂) by the opening and closing actions. That is, the respective valve holes 12f provided in the valve 12 are formed to change the communication states between the respective corresponding outflow ports 11b (11b₁, 11b₂) and the internal space of the valve 12 change with the rotation. Accordingly, the coolant taken into the internal space of the valve 12 (first valve portion 12b₁, second valve portion 12b₂) via the introduction port 12e is distributed toward the cooling passage and the bypass passage according to the opening and closing actions of the respective valve holes 12f, and the flow rates thereof are controlled.

FIG. 3 is a bottom view of the valve body 12b in FIG. 2, and FIG. 4 is a cross-sectional view of the valve body 12b in the axial direction. Note that, in the present embodiment, for convenience of description, "upper" and "lower" are described based on upward and downward directions in FIG. 1. In the valve hole 12f, the inflow port 11a (opening) side is a lower side and the opposite side thereto is an upper side.

As shown in FIGS. 2 to 4, a film portion 30 that guides the flow of the coolant flowing in from the inflow port 11a to the valve hole 12f₁ (to the outflow port 11b₁ side) is provided on one side 12f₁₁ of the valve hole 12f₁ in the first valve portion 12b₁, which is opposite to the inflow port 11a in the axial direction. In FIG. 3, the portion indicated by hatching shows the film portion 30, not the cross-section. The upper end of the film portion 30 is connected to an inner wall 12i of the first valve portion 12b₁ along the upper edge (one side 12f₁₁) of the valve hole 12f₁, and the lower end is connected to a portion facing the valve hole 12f₁ located on the outer circumference of the connecting part 12c (rotation shaft holder). For example, the film portion 30 is formed in a fan shape, which is formed to connect the outer wall of the tubular connecting part 12c (rotation shaft holder) and the one side 12f₁₁ of the valve hole 12f₁ in the circumferential direction (in a plan view).

In the present embodiment, as shown in FIGS. 2 and 3, the film portion 30 is provided along the one side 12f₁₁ of the valve hole 12f₁, extending from one end to the other. That is, the length in the circumferential direction of one side of the film portion 30 (the upper end of the film portion 30) connected to the inner wall 12i of the first valve portion 12b₁ along the upper edge (one side 12f₁₁) of the valve hole 12f₁ is formed to be equal to or longer than the length in the circumferential direction of the upper edge (one side 12f₁₁) of the valve hole 12f₁.

Furthermore, as shown in FIG. 4, the position of the upper end of the film portion 30, connected to the inner wall 12i of the first valve portion 12b₁ along the upper edge (one side 12f₁₁) of the valve hole 12f₁, is located at the downstream in the communication path R of the position of the lower end of the film portion 30 connected to the outer circumferential surface of the connecting part 12c (rotation shaft holder). Accordingly, the coolant flowing in from the inflow port 11a can be smoothly guided to the valve hole 12f₁, thereby reducing the pressure loss.

As shown in FIG. 4, the cross-sectional shape of the film portion 30 is curved to be recessed toward the deeper side as seen from the side of the valve hole 12f₁ or the inflow port 11a for the coolant (the film portion 30 is curved at the center in a direction away from the valve hole 12f₁ in the longitudinal cross-section) to reduce a pressure loss as much as possible. However, the invention is not limited to that form. For example, the cross-sectional shape may be a linear shape.

Furthermore, in the present embodiment, the length (width) in the circumferential direction of one side of the film portion 30 connected to the inner wall 12i of the first valve portion 12b₁ along the upper edge (one side 12f₁₁) of the valve hole 12f₁ is formed to be equal to or longer than the length in the circumferential direction of the upper edge (one side 12f₁₁) of the valve hole 12f₁. However, the invention is not limited to that form. The portion may be formed to have any width, considering the difference in pressure loss between another port (communication port) and itself.

In the configuration described above, for example, when the valve 12 rotates by driving of the shaft 12a (rotation shaft) and the valve hole 12f₁ of the first valve portion 12b₁ communicates with the outflow port 11b₁, the coolant flowing in from the engine side enters the first valve portion 12b₁ from the inflow port 11a, is guided to the valve hole 12f₁ along the surface of the film portion 30, and flows to the outflow port 11b₁.

In other words, without returning the coolant flowing up to the second valve portion (12b₂) to the first valve portion (12b₁) as in the conventional arts, the coolant flowing in from the inflow port (11a) can be directed to the valve hole (12f₁) of the first valve portion (12b₁).

In contrast, when the valve 12 rotates and the valve hole 12f₂ of the second valve portion 12b₂ communicates with the outflow port 11b₂, the coolant flowing in from the engine side flows through the communication path R to the second valve portion 12b₂ and then flows directly from the valve hole 12f₂ to the outflow port 11b₂.

As described above, according to the present embodiment, the film portion 30 is provided on one side 12f₁₁ of the valve hole 12f₁ in the first valve portion 12b₁, which is opposite to the inflow port 11a in the axial direction, to guide the flow of coolant flowing in from the inflow port 11a into the valve hole 12f₁. The film portion 30 is formed in a fan shape, which is formed to connect the outer wall of the tubular connecting part 12c to the one side 12f₁₁ of the circumferential direction of the valve hole 12f₁

Accordingly, even when the second valve portion 12b₂, having the valve hole 12f₂ at the downstream of the first valve portion 12b₁ in which the inflow port 11a is provided, is present, the coolant flowing in from the inflow port 11a and flowing up to the second valve portion 12b₂ can be guided directly to the valve hole 12f₂, without returning to the first valve portion 12b₁. As a result, the pressure loss can be reduced, and the power consumption can be reduced.

Furthermore, since the pressure loss in the valve can be reduced, the diameter of the valve hole can be designed to be smaller, and the layout property can be improved. In addition, the weight of the valve can be reduced, and the durability can be improved.

Note that, in the present embodiment, as shown in FIG. 4, the film portion 30 is shown to be integrally formed with the connecting part 12c of the first valve portion 12b₁ and the valve holes 12f; however, in the invention, the film portion may be integrally formed or separately formed and assembled.

In the present embodiment, the valve 12 in which the first valve portion 12b₁ and the second valve portion 12b₂ are coupled in the axial direction is described as an example. However, the electric valve according to the invention is not limited to that form. For example, three or more spherical valve portions may be coupled in the axial direction.

Furthermore, the film portion 30 may be provided in each of the valve portions, or the film portion 30 may be provided only in part of the valve portions as necessary. For example, the film portion 30 is provided in the second valve portion 12b₂, similar to the first valve portion 12b₁, and thus, the pressure loss when the coolant flows to the valve hole 12f₂ can be reduced.

Furthermore, in the present embodiment, the configuration in which the coolant flows from the inflow port 11a, as an opening, to the valve hole 12f₁ and the valve hole 12f₂ is described as an example; however, the invention is suitable for a configuration in which the coolant flows reverse direction to this.

In the present embodiment, the valve having the outer wall in a spherical shape (the so-called ball valve) is described. However, the invention is not limited to that form. A tubular valve having an outer wall surface in a straight barrel shape may be adopted.

Furthermore, in the present embodiment, as an example, the electric valve 1 that distributes the coolant flowing in from the inflow port 11a (via the frame 17 side) toward the cooling passage and the bypass passage is described. However, the connection configuration of the flow passages communicating with the electric valve 1 is not limited to that. The connection configuration can be appropriately changed according to the specifications of the cooling circuit (the circulation system of the coolant) of the automobile: for example, for the flow passage in which the coolant flows from the inflow port (upstream) formed in the outer circumference of the body 11c of the housing 11 (inner wall 20a of the valve housing portion 20) to the outflow port (downstream) at the frame 17 side or the like.

Moreover, in the present embodiment, the seal members 14 (14₁, 14₂) have structures pressed against the outer wall of the valve 12 by urging forces of the coil springs as shown in FIG. 1, but not limited to those. As long as the seal members can block the leakage of the coolant passing through the valve holes 12f of the valve 12 and distributed toward the adaptor 13, the seal members may be implemented by other structures.

The preferred embodiments of the invention are described in detail above. Alterations, modifications, and changes can be made as long as not depart from the scope of the claims. In the claims, the opening side of the housing in the valve hole is to be down side, and the opposite side is up side; however, this does not limit the up and down direction in the vertical direction in the attachment state of the electric valve of the invention. For example, "the downside of the valve hole" in the claims is placed at the upside in the vertical direction or placed laterally depending on the direction in which the electric valve is attached.

### Reference Signs List

- 1: electric valve
- 11: housing
- 11a: opening
- 11b: outflow port (communication port)
- 12: valve
- 12a: shaft
- 12b₁: first valve portion (valve portion)
- 12b₂: second valve portion (valve portion)
- 12f₁: valve hole
- 12f₂: valve hole
- 12c: connecting part (rotation shaft holder)
- 12m: outer wall (valve outer wall)
- 12n: outer wall (valve outer wall)
- 20: valve housing portion
- 20a: inner wall
- 30: film portion
- R: communication path

## Claims

1. An electric valve comprising:
a housing with an opening at one end and a communication port in an outer circumference thereof;
a valve that is inserted into the housing, rotates about a rotation shaft, and opens and closes the communication port; and
a driver for driving the valve to rotate,
wherein
the valve has a hollow valve portion, a rotation shaft holder located at a center of the valve portion, through which the rotation shaft is inserted, and a film portion located inside the valve portion,
the valve portion is disposed with one end facing the opening, and provided with an outer wall capable of blocking the communication port, a valve hole capable of communicating with the communication port, and a valve opening formed at the one end of the valve portion and communicating with the opening, and
in the valve hole, with the opening side as a downside and an opposite side as an upside, the film portion is formed in a fan shape in a plan view, and has an upper end connected to an inner wall of the valve portion along an upper edge of the valve hole and a lower end connected to a part of an outer circumference of the rotation shaft holder facing the valve hole.

2. The electric valve according to claim 1,
wherein
a length in a circumferential direction of one side of the film portion connected to the inner wall of the valve portion along the upper edge of the valve hole is formed to be equal to or longer than a length in the circumferential direction of the upper edge of the valve hole.

3. The electric valve according to claim 1 or 2,
wherein
in a longitudinal cross-section of the valve, a center part of the film portion is curved or inclined in a direction away from the valve hole.
